# EUROPÄISCHE PATENTSCHRIFT

(11) **EP 0 875 667 B1**
(45) Veröffentlichungstag und Bekanntmachung des Hinweises auf die Patenterteilung: **08.03.2006**
(21) Anmeldenummer: 98107226.7
(22) Anmeldetag: 21.04.1998
(51) Int. Cl.: F01N 3/28

(54) **Abgasreinigungssystem für Dieselmotoren**
Exhaust gas cleaning system for diesel engines
Système d'épuration des gaz d'échappement pour moteurs diesel

(30) Priorität: 02.05.1997 DE 19718727
(43) Veröffentlichungstag der Anmeldung: 04.11.1998
(73) Patentinhaber: Umicore AG & Co. KG, 63457 Hanau-Wolfgang (DE)
(72) Erfinder: Leyrer, Jürgen, Dr., 79618 Rheinfelden (DE); Klein, Harald, Dr., 63856 Bessenbach (DE); Lox, Egbert, Dr., 63457 Hanau (DE); Kreuzer, Thomas, Dr., 61184 Karben (DE); Ried, Thomas, 68647 Biblis-Nordheim (DE)
(74) Vertreter: Stellbrink, Axel

(56) Entgegenhaltungen:
- DE-A- 3 012 182
- DE-A- 4 024 942
- DE-C- 19 543 219
- US-A- 5 591 413

## Beschreibung

Die vorliegende Erfindung betrifft ein Abgasreinigungssystem für Dieselmotoren.

Das Abgas von Dieselmotoren unterscheidet sich in vielen Punkten von dem Abgas von Benzinmotoren. Neben den auch bei Benzinmotoren üblichen Schadstoffkomponenten wie Kohlenmonoxid, Kohlenwasserstoffe und Stickoxide enthält es zusätzlich sogenannte Dieselpartikel, bei denen es sich um eine Aggregation von Rußpartikeln, Sulfaten und unverbrannten langkettigen Kohlenwasserstoffen handelt, die neben den Sulfaten für die Zusammenballung der Rußpartikel verantwortlich sind. Der mittlere Durchmesser der Rußpartikel liegt im Bereich zwischen etwa 50 bis 300 nm. Es treten jedoch auch erhebliche Anteile mit Partikeldurchmessern bis zu 10 µm auf.

Neben der Tatsache, daß das Dieselabgas etwa 3 bis 10 Vol.-% Sauerstoff enthält und wesentlich kälter als das Abgas von Benzinmotoren ist (nur 100 bis 700°C verglichen mit 300 bis 1000°C bei Benzinmotoren) stellt der hohe Anteil an Partikeln ein wesentliches Problem bei der Abgasreinigung dar.

Zur Entfernung der Partikel aus dem Abgas wurden mechanische Filtersysteme entwickelt, die die Partikel aus dem Abgasstrom herausfiltern. Mit zunehmender Ablagerung der Partikel auf den Filtern erhöht sich der durch sie verursachte Druckverlust, so daß sie periodisch durch Abbrennen der Partikel regeneriert werden müssen. Zur Erleichterung der Regeneration werden die Filter teilweise mit katalytisch aktiven Beschichtungen versehen.

Kohlenmonoxid und unverbrannte, gasförmige Kohlenwasserstoffe können wegen des hohen Sauerstoffgehaltes im Dieselabgas relativ leicht durch sogenannte Dieseloxidationskatalysatoren zu Kohlendioxid und Wasser umgesetzt werden. Es handelt sich dabei zumeist um monolithische Wabenkörper aus inerten Materialien wie zum Beispiel Keramik oder Metall, die von parallelen, frei durchströmbaren Strömungskanälen für das Abgas durchzogen werden. Die Wände der Strömungskanäle sind mit katalytisch aktiven Beschichtungen für die Oxidation von Kohlenmonoxid und Kohlenwasserstoffen beschichtet. Die Anzahl der Strömungskanäle pro Querschnittsfläche der Wabenkörper wird als Zelldichte bezeichnet. Sie liegt bei Dieseloxidationskatalysatoren im Bereich zwischen 4 und 62 cm⁻². Oberhalb einer Zelldichte von 62 cm⁻² wächst bei diesen Katalysatoren die Gefahr, daß sich die Dieselpartikel auf den Wänden der Strömungskanäle ablagern und sie schließlich verstopfen.

Dieseloxidationskatalysatoren weisen spezielle Katalysatorformulierungen auf, die so optimiert sind, daß sie zwar Kohlenmonoxid und Kohlenwasserstoffe mit guten Wirkungsgraden oxidieren, nicht jedoch das im Abgas ebenfalls vorhandene Schwefeldioxid und die Stickoxide noch weiter aufoxidieren. Im Falle von Schwefeldioxid würde eine weitere Oxidation zur Bildung von Sulfaten führen, die ihrerseits wieder die Bildung von Dieselpartikeln begünstigen.

Gute Oxidationskatalysatoren vermeiden diese unerwünschte Oxidation von Schwefeldioxid. Darüber hinaus wird bei Verwendung dieser Katalysatoren sogar eine gewisse Verminderung der Partikelmenge beobachtet, da der Gehalt der Partikel an langkettigen, kondensierten Kohlenwasserstoffen (SOF: soluble organic fraction) durch Oxidation am Katalysator vermindert wird. Mit diesen Katalysatoren ließen sich bisher die Abgasgrenzwerte für Dieselfahrzeuge bezüglich Kohlenmonoxid, Kohlenwasserstoffen und Partikeln einhalten.

Zur Verminderung der Stickoxide im Dieselabgas wurden spezielle Reduktionskatalysatoren entwickelt, die in der Lage sind, die Stickoxide auch in Anwesenheit von Sauerstoff zu elementarem Stickstoff zu reduzieren. Das im Abgas vorhandene Kohlenmonoxid und die unverbrannten Kohlenwasserstoffe dienen dabei als Reduktionsmittel und werden zu Kohlendioxid und Wasser oxidiert, während die Stickoxide zu Stickstoff reduziert werden. Reduktionskatalysatoren sind also auch immer gute Oxidationskatalysatoren. Die Oxidationsraten liegen bei über 80 %. Die maximalen Umsetzungsraten für die Stickoxide erreichen etwa 70 %.

Die weitere Verschärfung der Abgasgrenzwerte für Dieselmotoren macht die Verbesserung der genannten Umsetzungswirkungsgrade für die gasförmigen Schadstoffe als auch die Verminderung der Partikelemissionen notwendig.

Es ist bekannt, daß die Effektivität von Katalysatoren für Benzinmotoren durch Erhöhung ihrer geometrischen Oberfläche verbessert werden kann. Bei den besprochenen Wabenkatalysatoren bedeutet dies eine Erhöhung der Zelldichte. Dementsprechend sind wabenförmige Monolithe in der Entwicklung mit Zelldichten bis zu 300 cm⁻². Zelldichten von bis zu 100 cm⁻² sind bei Benzinmotoren schon im Einsatz. Ihre Verwendung für die Reinigung der Dieselabgase wird jedoch durch die Dieselpartikel behindert. Wie schon ausgeführt wurde, stellen Zelldichten von etwa 60 cm⁻² das Maximum dar, mit dem typische Dieselabgase ohne die Gefahr einer Verstopfung der Wabenkörper gereinigt werden können.

Die Grenze von etwa 60 cm⁻² ist kein absolut fester Wert, sondern hängt von der Natur der Partikel im Dieselabgas und damit auch von der Art des Dieselmotors ab. Abhängig vom jeweiligen Motortyp kann diese Grenze um ± 20 cm⁻² nach oben oder unten verschoben sein.

In der DE-A-3012182 wird eine Vorrichtung zur katalytischen Behandlung von Gasen beschrieben, die aus einem ersten Katalysatorkörper zur teilweisen Verbrennung der Gase zur Erzeugung eines katalytischen Verbrennungsgases und einem zweiten, hinter dem ersten Katalysatorkörper angeordneten Katalysatorkörper zur Aufnahme der in dem ersten Katalysator verbrannten Gase zur Verbrennung derselben besteht.

Die US-A-5591413 beschreibt einen Metallträger für einen Katalysator.

Aufgabe der vorliegenden Erfindung ist es daher, ein Abgasreinigungssystem für Dieselmotoren anzugeben, welches es gestattet, Wabenkatalysatoren mit hohen Zelldichten für die Reinigung der Dieselabgase ohne Verstopfungsgefahr durch die Dieselpartikel zu verwenden.

Diese Aufgabe wird durch ein Abgasreinigungssystem für Dieselmotoren aus zwei Dieselabgaskatalysatoren gelöst, welche in Form von Wabenkörpern mit parallelen Strömungskanälen aufgebaut sind, deren Wandflächen mit einer katalytisch aktiven Beschichtung versehen sind. Das Abgasreinigungssystem ist dadurch gekennzeichnet, daß der stromaufwärts angeordnete erste Katalysator weniger als 40 bis 80 Strömungskanäle und der stromabwärts angeordnete zweite Katalysator mehr Strömungskanäle pro Quadratzentimeter Querschnittsfläche aufweist als der erste Katalysator.

Bevorzugt weist der erste Katalysator 4 bis 70 und der zweite Katalysator mehr als 40 bis 300 Strömungskanäle pro Quadratzentimeter Querschnittsfläche des Wabenkörpers auf.

Durch die relativ grobe Zellstruktur des ersten Katalysators wird verhindert, daß er durch die Partikel im Abgas verstopft werden kann. Durch Kontakt der Partikel mit der Katalysatorbeschichtung werden die ihnen anhaftenden, kondensierten Kohlenwasserstoffe zum Teil oxidiert. Dadurch verringert sich .der Durchmesser der Partikel und sie können auch den zweiten Katalysator.mit der höheren Zelldichte ohne Verstopfungsgefahr passieren. Ein möglicher Grund für die geringere Verstopfungsneigung nach dem ersten Katalysator könnte auch die Tatsache sein, daß die Partikel durch das Verbrennen der auf dem Ruß kondensierten langkettigen Kohlenwasserstoffe quasi getrocknet werden. Die "trockenen" Partikel zeigen eine geringere Neigung zur Zusammenballung und damit Verstopfung als die "feuchten" Partikel.

Geeignete Katalysatoren für das Katalysatorsystem sind Dieseloxidationskatalysatoren oder Reduktionskatalysatoren. Beide Katalysatortypen können auch in dem Katalysatorsystem kombiniert werden.

Dieseloxidationskatalysatoren werden zum Beispiel in der DE 39 40 758 C2 beschrieben. Mögliche Reduktionskatalysatoren für das Katalysatorsystem werden in der noch nicht offengelegten Patentanmeldung DE 196 14 540 offenbart.

Die katalytische Aktivität dieser Katalysatoren ist temperaturabhängig. Bei Umgebungstemperatur sind sie katalytisch inaktiv und lassen die Schadstoffe ungehindert passieren. Mit steigender Abgastemperatur wächst die katalytische Aktivität für die Umsetzung von Kohlenmonoxid und Kohlenwasserstoffen monoton an und erreicht bei der sogenannten Anspringtemperatur Umsetzungsraten von 50 %. Die Anspringtemperatur kann für jeden Schadstoff verschieden sein. Wegen der geringen Abgastemperaturen des Dieselabgases wurden Katalysatoren mit Anspringtemperaturen für Kohlenmonoxid zwischen 100 und 200°C und für langkettige Kohlenwasserstoffe von unter 75°C entwickelt (DE 196 14 540.6; noch nicht veröffentlicht). Mit steigender Abgastemperatur nehmen auch die Umsetzungsraten von Reduktionskatalysatoren für die Stickoxide zunächst zu. Sie durchlaufen jedoch ein Maximum und fallen dann bei hohen Temperaturen wieder nahezu auf Null ab. Reduktionskatalysatoren weisen also ein sogenanntes Temperaturfenster für die Umsetzung der Stickoxide auf. Die Lage des Temperaturfensters ist abhängig von der Katalysatorformulierung. Es gibt "Hochtemperaturkatalysatoren" mit einem Temperaturfenster zwischen 280 und 400°C und "Niedertemperaturkatalysatoren" mit einem Temperaturfenster zwischen 170 und 300°C.

Eine bevorzugte Ausführungsform des erfindungsgemäßen Katalysatorsystems sieht die Kombination eines "Niedertemperatur"-Reduktionskatalysators auf einem grobzelligen Wabenkörper mit einem nachgeschalteten "Hochtemperatur"-Reduktionskatalysator auf einem hochzelligen Wabenkörper vor. Der erste Katalysator wird motornah in einem Bereich der Abgasanlage angeordnet, in dem die Abgastemperatur bei Vollast mehr als 300°C beträgt, und der zweite Katalysator wird motorfern in einem Bereich angeordnet, in dem die Abgastemperatur bei Vollast im Temperaturfenster für die Stickoxidreduktion des zweiten Katalysators liegt.

Diese Ausführungsform hat den Vorteil, daß der erste, motornah angeordnete Katalysator sehr schnell aufgeheizt wird. Er durchläuft dabei sein Temperaturfenster für die Stickoxidreduktion. Die Abgastemperatur erreicht hier schnell Werte über 300°C, bei denen der erste Katalysator im wesentlichen nur noch eine oxidierende Wirkung aufweist. Die hohe Abgastemperatur in diesem Bereich begünstigt die Umsetzung der auf den Rußpartikeln adsorbierten langkettigen Kohlenwasserstoffe. Aufgrund der geringen Zelldichte des ersten Katalysators werden die gasförmigen Kohlenwasserstoffe und Kohlenmonoxid nicht vollständig umgesetzt und gelangen zusammen mit den nicht umgesetzten Stickoxiden zum zweiten Katalysator. Auf seinem Weg zum zweiten Katalysator kühlt sich das Abgas ab. Die Abkühlung kann durch Wahl der Weglänge zwischen erstem und zweitem Katalysator und gegebenenfalls durch auf die Abgasleistung aufgesetzte Kühlrippen so optimiert werden, daß die Abgastemperatur am zweiten Katalysator gerade in sein Temperaturfenster für die Stickoxidreduktion fällt, so daß die im Abgas mitgeführten Stickoxide unter Verwendung der restlichen Kohlenwasserstoffe und des Kohlenmonoxids als Reduktionsmittel zu Kohlendioxid, Wasser und Stickstoff umgesetzt werden. Die katalytische Wirkung des zweiten Katalysators kann durch Wahl einer hohen Zelldichte optimiert werden, ohne daß die Gefahr einer Verstopfung durch Rußpartikel besteht.

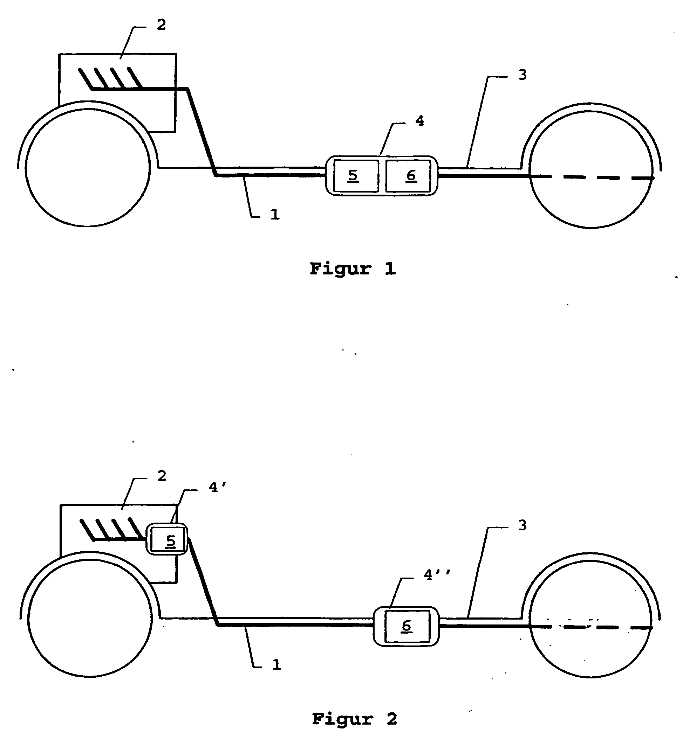

Die Figuren 1 und 2 zeigen Prinzipskizzen des erfindungsgemäßen Katalysatorsystems.
- Figur 1:: Katalysatorsystem aus einem niedrig- und einem hochzelligen Katalysator im Unterbodenbereich eines Fahrzeugs.
- Figur 2:: Katalysatorsystem aus einem motornahen, niedrigzelligen Katalysator und einem motorfernen, hochzelligen Katalysator.
- Figur 3:: Verlauf des Druckverlusts bei verschiedenen Katalysatoren
- Figur 4:: Partikelverteilung hinter verschiedenen Katalysatorsystemen .

Figur 1 zeigt eine nicht zur Erfindung gehorende Ausführungsform eines Abgasreinigungssystems. Die Abgasanlage 1 eines Verbrennungsmotors 2 weist im Unterbodenbereich eines Kraftfahrzeugs 3 einen Konverter 4 auf. In dem gemeinsamen Konvertergehäuse sind ein niedrigzelliger Katalysator 5 und ein hochzelliger Katalysator 6 hintereinander angeordnet.

Figur 2 zeigt eine getrennte Anordnung von Katalysator 5 und Katalysator 6. Katalysator 5 ist in einem motornahen Konvertergehäuse 4' und Katalysator 6 in einem motorfernen Konvertergehäuse 4" im Unterbodenbereich des Fahrzeugs untergebracht.

Tabelle 1 zeigt die geometrischen Abmessungen der Wabenkörper aus Cordierit, die in den folgenden Beispielen verwendet wurden.

**Tabelle 1**

| | | | | | |
|---|---|---|---|---|---|
| **Waben-** | **Zelldichte** | **Durch-** | **Länge** | **Wand-** | **Volumen** |

| **körper** | **2. [cm**^{**-2**}**]** | **messer [cm]** | **[cm]** | **stärke [mm]** | **[1]** |
|---|---|---|---|---|---|
| Typ 1 | 31 | 9,3 | 11,4 | 0,3 | 0,77 |
| Typ 2 | 93 | 9,0 | 11,0 | 0,1 | 0,7 |

### Beispiel 1

Es wurden jeweils ein Wabenkörper vom Typ 1 und 2 mit einer Beschichtung gemäß Beispiel 1 der Patentanmeldung DE 196 14 540 beschichtet. Die fertige Katalysatorbeschichtung enthielt Platin als katalytisch aktive Komponente auf einem Aluminiumsilikat mit 5 Gew.-% Siliziumdioxid zur thermischen Stabilisierung. Daneben enthielt sie noch 5 verschiedene Zeolithe. Das Gewichtsverhältnis des Aluminiumsilikats zu den 5 Zeolithen betrug 10:1:1:1:1:1. Die Einzelheiten der Herstellung des katalytisch aktiven Beschichtungsmaterials sind der zitierten Patentanmeldung zu entnehmen.

Die fertigen Katalysatoren K1 und K2 wiesen die Beschichtungsdaten von Tabelle 2 auf:

**Tabelle 2**

| **Katalysator** | **Wabenkörper** | **Beschichtung** | **Beladung** |
|---|---|---|---|
| K1 | Typ 1 | 140 g/l | 1,41 g Pt/l |
| K2 | Typ2 | 100 g/l | 1,10 g Pt/l |

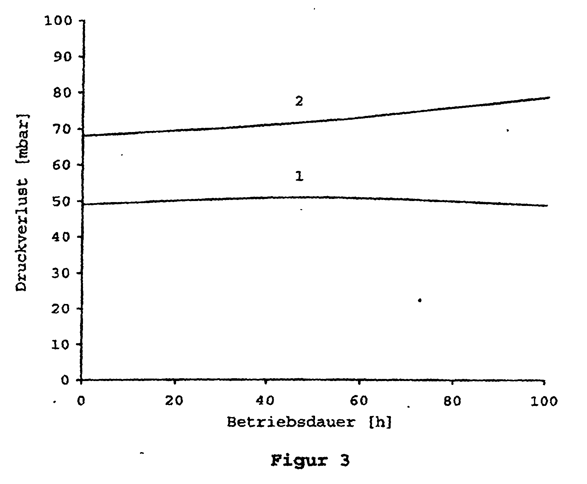

Zur Demonstration der Verstopfungsneigung der beiden Katalysatoren K1 und K2 wurde jeweils der Verlauf des Druckverlustes in Abhängigkeit der Betriebsdauer aufgenommen (Figur 3). Hierzu wurde zuerst Katalysator K1 in das Konvertergehäuse der Abgasanlage eines direkteinspritzenden Dieselmotors (Hubraum 2,0 1) eingebaut und der zeitliche Verlauf des Druckverlustes bei einer Drehzahl des Motors von 2000 min⁻¹und einem Drehmoment von 50 Nm (Kurve 1) gemessen. Das gleiche Experiment wurde mit Katalysator K2 anstatt K1 wiederholt (Kurve 2). Kurve 1 zeigt einen nahezu konstanten Druckverlust von Katalysator 1 während der Meßdauer von 100 Stunden. Gemäß Kurve 2 weist der hochzellige Katalysator dagegen einen progressiven Anstieg des Druckverlustes auf, der schließlich zur völligen Verstopfung des Katalysators führen würde.

### Beispiel 2

In das Konvertergehäuse der Abgasanlage wurden nacheinander 3 verschiedene Katalysatorsysteme aus jeweils 2 Wabenkörpern mit unterschiedlichen Beschichtungszuständen eingebaut und die Partikelverteilung hinter dem Konverter vermessen. Die drei Katalysatorsysteme hatten die in Tabelle 3 angegebenen Eigenschaften:

**Tabelle 3**

| **System** | **Wabenkörper 1** | **Wabenkörper 2** |
|---|---|---|
| System 1 | W 1 | W 2 |
| System 2 | K 1 | W 2 |
| System 3 | K 1 | K 2 |

- W1, W2:: unbeschichtete Wabenkörper vom Typ 1 bzw. 2
- K1:: Katalysator K1 von Beispiel 1
- K2:: Katalysator K2 von Beispiel 2

Die Partikelverteilungen wurden mit einem Niederdruckimpaktor LPI 25 von Hauke ermittelt. Das Gerät dient zur Bestimmung der Partikelgrößen eines Aerosols (hier das Dieselabgas) und arbeitet nach dem sogenannten Trägheits-Meßverfahren. Hierbei werden die Rußpartikel des Abgases in aufeinanderfolgenden Stufen nach Partikelgrößen getrennt auf Prallplatten abgeschieden. In einer solchen Abscheidestufe wird das Abgas zusammen mit den darin suspendierten Rußpartikeln durch eine Düse beschleunigt und senkrecht auf eine Prallplatte geleitet. Auf der Platte scheidet sich infolge ihrer Trägheit die jeweils schwerste Partikelfraktion ab, während der Gasstrom mit den leichteren Partikeln umgelenkt wird und in die nächste Abscheidestufe geleitet wird. Die abgeschiedenen Massen der Partikelfraktionen werden durch Differenzwägung der Prallplatten vor und nach der Messung bestimmt. Die Messungen wurden über einen gesamten Prüfzyklus nach MVEG-A vorgenommen.

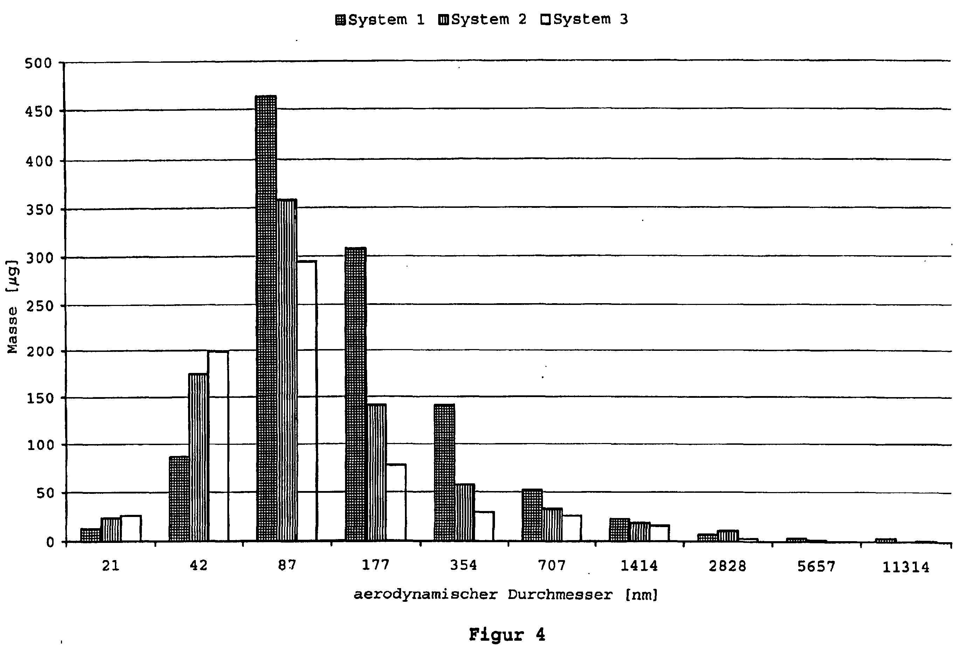

Zunächst wurde die "Rohemission" des Dieselmotors nach Durchströmen der beiden unbeschichteten Wabenkörper W1 und W2 bestimmt (System 1). Anschließend wurden die Katalysatorsysteme 2 und 3 untersucht. Die auf diese Weise ermittelten Partikelverteilungen sind in Figur 4 dargestellt. In Figur 4 ist die auf den Prallplatten abgeschiedene Masse an Rußpartikeln über dem jeweiligen aerodynamischen Durchmesser aufgetragen.

Man erkennt anhand von Figur 4, daß die Partikelemission durch das System 2 erheblich gegenüber dem katalytisch inaktiven System 1 vermindert wird. Die Ursache hierfür ist die katalytische Oxidation der auf den Dieselpartikeln kondensierten langkettigen Kohlenwasserstoffe. Dabei verschiebt sich der Schwerpunkt der Partikelverteilung zu kleineren Partikeldurchmessern. Oberhalb eines aerodynamischen Durchmessers von etwa 80 nm ist die abgeschiedene Partikelmasse bei Verwendung von katalytischbeschichteten Wabenkörpern geringer als bei unbeschichteten Wabenkörpern. Unterhalb von 80 nm sind diese Verhältnisse umgekehrt. Das System 3 mit zwei katalytisch beschichteten Wabenkörpern bringt gegenüber dem System 2 eine weitere Verringerung der Partikelemission.

Die gesamte Partikelemission hinter den unbeschichteten Wabenkörpern (System 1) betrug 1100 *µ*g. Durch System 2 wurde dieser Wert auf 820 *µ*g vermindert. Hinter System 3 wurde nur noch eine gesamte Partikelemission von 67 µg gemessen.

## Patentansprüche

1. Abgasreinigungssystem für Dieselmotoren aus zwei hintereinandergeschalteten Dieselabgaskatalysatoren in Form von Wabenkörpern mit parallelen Strömungskanälen, deren Wandflächen mit einer katalytisch aktiven Beschichtung versehen sind, wobei der erste Katalysator (5) mit einer Zelldichte von weniger als 40 bis 80 Strömungskanälen pro Quadratzentimeter Querschnittsfläche motornah und der zweite Katalysator (6) mit eines größeren Zelldichte als der erste Katalysator (5) motorfern im Unterbodenbereich angeordnet ist,
**dadurch gekennzeichnet,**
**daß** es sich bei beiden Katalysatoren (5, 6) um Reduktionskatalysatoren handelt, von denen der motornahe katalysator (5) ein Temperaturfenster für die Stickoxidreduktion in Anwesenheit von Sauerstoff zwischen 170 und 300°C und der motorfern Katalysator (6) ein Temperaturfenster für die Stickoxidreduktion zwischen 280 und 400°C besitzt.

2. Abgasreinigungssystem nach Anspruch 1,
**dadurch gekennzeichnet,**
**daß** der erste Katalysator (5) 4 bis 70 und der zweite Katalysator (6) mehr als 40 bis 300 Strömungskanäle pro Quadratzentimeter Querschnittsfläche aufweisen.

3. Abgasreinigungssystem nach Anspruch 1 oder 2,
**dadurch gekennzeichnet,**
**daß** der erste Katalysator (5) motornah in einem Bereich der Abgasanlage angeordnet ist, in dem die Abgastemperatur bei Vollast mehr als 300°C beträgt und der zweite Katalysator (6) motorfern in einem Bereich angeordnet ist, in dem die Abgastemperatur bei Vollast im Temperaturfenster für die Stickoxidreduktion dieses zweiten Katalysators (6) liegt.

## Claims

1. An exhaust gas purification for diesel motors comprising two diesel exhaust catalytic converters, arranged in sequence one behind the other, each being in the form of a honeycomb body with parallel flow channels, whose wall surfaces are provided with a catalytically active coating, wherein the first catalytic converter (5) having a cell density of less than 40 to 80 flow channels per cross-sectional square centimeter is situated near the motor and the second catalytic converter (6) having a cell density larger than that of the first catalytic converter (5) is situated away from the motor in the undercarriage area,
**characterised in that**
the two catalytic converters (5, 6) are reduction catalysts,
wherein the catalytic converter (5) near the motor has a temperature window for the nitrogen oxide reduction in the presence of oxygen between 170° and 300°C and the catalytic converter (6), away from the motor, has a temperature window for the nitrogen oxide reduction between 280° and 400°C.

2. The exhaust gas purification system according to claim 1,
**characterised in that**
the first catalytic converter (5) has 4 to 70 and the second catalytic converter (6) has more than 40 to 300 flow channels per cross-sectional square centimeter.

3. The exhaust gas purification system according to claim 1 or 2,
**characterised in that**
the first catalytic converter (5), near the motor, is situated in an area of the exhaust gas system, in which the exhaust gas temperature under full load amounts to more than 300°C and the second catalytic converter (6), away from the motor, is situated in an area in which the exhaust gas temperature at full load lies within the temperature window for the nitrogen oxide reduction of this second catalytic converter (6).

## Revendications

1. Système d'épuration des gaz d'échappement pour moteurs diesel composé de deux catalyseurs de gaz d'échappement diesel disposés l'un derrière l'autre sous forme de corps en nid d'abeilles avec des canaux d'écoulement parallèles, dont les surfaces des parois sont dotées d'un revêtement actif du point de vue catalytique, dans lequel le premier catalyseur (5) avec une densité d'alvéoles de moins de 40 à 80 canaux d'écoulement par centimètre carré de superficie de section est disposé proche du moteur et le deuxième catalyseur (6) avec une densité d'alvéoles supérieure à celle du premier catalyseur (5) est disposé éloigné du moteur dans la zone du dessous de caisse,
**caractérisé en ce que**
les deux catalyseurs (5,6) sont des catalyseurs de réduction, le catalyseur (5) proche du moteur possédant une plage de température pour la réduction de l'oxyde d'azote en présence d'oxygène de 170 à 300 °C et le catalyseur (6) éloigné du moteur une plage de température pour la réduction de l'oxyde d'azote de 280 à 400 °C.

2. Système d'épuration des gaz d'échappement selon la revendication 1,
**caractérisé en ce que**
le premier catalyseur (5) possède de 4 à 70 et le deuxième catalyseur (6) plus de 40 à 300 canaux d'écoulement par centimètre carré de superficie de section.

3. Système d'épuration des gaz d'échappement selon la revendication 1 ou 2,
**caractérisé en ce que**
le premier catalyseur (5) proche du moteur est disposé dans une région du système d'échappement des gaz dans laquelle la température des gaz d'échappement à pleine charge est de plus de 300 °C et le deuxième catalyseur (6) éloigné du moteur est disposé dans une région dans laquelle la température des gaz d'échappement à pleine charge est située sur la plage de température pour la réduction de l'oxyde d'azote de ce deuxième catalyseur (6).
